(19) Europäisches Patentamt
European Patent Office
Office européen des brevets

(11) **EP 3 550 478 A1**

(12) **EUROPEAN PATENT APPLICATION**
published in accordance with Art. 153(4) EPC

(43) Date of publication:
**09.10.2019 Bulletin 2019/41**

(51) Int Cl.:
***G06Q 10/04*** *(2012.01)*

(21) Application number: **17875257.2**

(86) International application number:
**PCT/JP2017/041186**

(22) Date of filing: **16.11.2017**

(87) International publication number:
**WO 2018/101050 (07.06.2018 Gazette 2018/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **30.11.2016 JP 2016232173**

(71) Applicant: **Sony Corporation**
**Tokyo 108-0075 (JP)**

(72) Inventors:
• **TAKAMATSU, Shingo**
**Tokyo 108-0075 (JP)**
• **KOBAYASHI, Yoshiyuki**
**Tokyo 108-0075 (JP)**
• **NODA, Atsushi**
**Tokyo 108-0075 (JP)**
• **TANAKA, Yasufumi**
**Tokyo 108-0075 (JP)**

(74) Representative: **MFG Patentanwälte**
**Meyer-Wildhagen Meggle-Freund**
**Gerhard PartG mbB**
**Amalienstraße 62**
**80799 München (DE)**

(54) **INFORMATION PROCESSING DEVICE AND INFORMATION PROCESSING METHOD**

(57) The present disclosure relates to an information processing apparatus and an information processing method each enabling a transmission apparatus which transmits observation information to be used in prediction to be readily selected from a plurality of transmission apparatuses.

A selection section selects a sensor which transmits observation information to be used in prediction as a use sensor from a plurality of sensors on the basis of pieces of information associated with the plurality of sensors, respectively. The present disclosure, for example, can be applied to an information processing apparatus or the like which performs prediction of failure probability of an industrial robot by using observation information which is transmitted from a predetermined sensor of a plurality of sensors installed in an industrial robot.

FIG. 2

**Description**

[Technical Field]

The present disclosure relates to an information processing apparatus and an information processing method. Particularly, the present disclosure relates to an information processing apparatus and an information processing method each of which enables a transmission apparatus which transmits observation information used in prediction to be readily selected from a plurality of transmission apparatuses.

[Background Art]

Many systems each predicting that a certain event occurs from observation information of a large number of sensors are present. For example, there is a system in which a large number of sensors each measuring a behavior or a state are mounted to manufacturing equipment, and which predicts a failure of the manufacturing equipment from observation information obtained from these sensors. Furthermore, there is also a system in which a large number of sensors each observing the climate or a state of the crops are mounted to an agricultural land, and which predicts normal growth of the crops from observation information obtained from these sensors.

In such a system, the observation information which is necessary and sufficient for the prediction is acquired by using only the substantial partial sensors of a large number of sensors mounted in many cases. Furthermore, performing the prediction by using the observation information unnecessary for the prediction leads to the reduction of the prediction accuracy, the waste of a resource of the prediction arithmetic operation or the communication, the increase of the power consumption, and the like. Therefore, the sensors used in the prediction need to be selected from a large number of sensors mounted.

Then, it is devised that a human being such as a user or a designer of a prediction system selects a sensor which is used in prediction on the basis of prior knowledge for a prediction field or a prediction system (for example, refer to PTL 1).

[Citation List]

[Patent Literature]

[PTL 1]
Japanese Patent Laid-Open No. 2016-109019

[Summary]

[Technical Problem]

However, the advanced prior knowledge for the prediction field or the prediction system is necessary for the selection of the sensor which is to be used in the prediction. Therefore, it is desired that a transmission apparatus which transmits the observation information which is to be used in the prediction is enabled to be readily selected from a plurality of transmission apparatuses such as the sensor which transmits the observation information regardless of the prior knowledge of the human being such as the user or the designer of the prediction system.

The present disclosure has been made in the light of such a situation, and enables a transmission apparatus which transmits observation information which is used in prediction to be readily selected from a plurality of transmission apparatuses.

[Solution to Problem]

An information processing apparatus according to an aspect of the present disclosure is an information processing apparatus provided with a selection section selecting a transmission apparatus which transmits observation information to be used in prediction as a use apparatus from a plurality of transmission apparatuses on the basis of pieces of information associated with the plurality of transmission apparatuses, respectively.

An information processing method according to an aspect of the present disclosure corresponds to the information processing apparatus according to the aspect of the present disclosure.

In the aspect to the present disclosure, the transmission apparatus which transmits the observation information to be used in the prediction is selected as the use apparatus from the plurality of transmission apparatuses on the basis of the pieces of information associated with the plurality of transmission apparatuses, respectively.

It should be noted that the information processing apparatuses according to the aspect of the present disclosure can be realized by causing a computer to execute a program.

Furthermore, for the purpose of realizing the information processing apparatuses according to the aspect of the present disclosure, the program which is caused to execute the program can be provided by transmitting the program through a transmission medium, or by recording the program in the recording medium.

[Advantageous Effect of Invention]

According to the aspect of the present disclosure, the transmission apparatus which transmits the observation information to be used in the prediction can be readily selected from a plurality of transmission apparatuses.

It should be noted that the effect described above is by no means necessarily limited thereto, and any of the effects described in the present disclosure may be offered.

[Brief Description of Drawings]

FIG. 1 is a view depicting an example of a construction of a first embodiment of a failure predicting system to which the present disclosure is applied.

FIG. 2 is a block diagram depicting an example of a configuration of an information processing apparatus depicted in FIG. 1.

FIG. 3 is a flow chart explaining failure probability calculating processing in the information processing apparatus depicted in FIG. 2.

FIG. 4 is a flow chart explaining the failure probability calculating processing of FIG. 3.

FIG. 5 is a flow chart explaining sensor selecting processing of FIG. 3.

FIG. 6 is a view explaining a difference $Y_p$.

FIG. 7 is a view depicting an example of a sensor set as a processing target in Step S95 of FIG. 5.

FIG. 8 is a flow chart explaining predicted accuracy value calculating processing of FIG. 5.

FIG. 9 is a flow chart explaining learning processing in a leaning section of FIG. 2.

FIG. 10 is a view depicting an example of a configuration of a second embodiment of the failure predicting system to which the present disclosure is applied.

FIG. 11 is a block diagram depicting an example of a configuration of an information processing apparatus of FIG. 10.

FIG. 12 is a flow chart explaining failure probability calculating processing in the information processing apparatus of FIG. 11.

FIG. 13 is a block diagram depicting an example of a configuration of hardware of a computer.

[Description of Embodiments]

Hereinafter, modes for carrying out the present disclosure (hereinafter, referred to as embodiments) will be described. It should be noted that the description will be given in accordance with the following order.

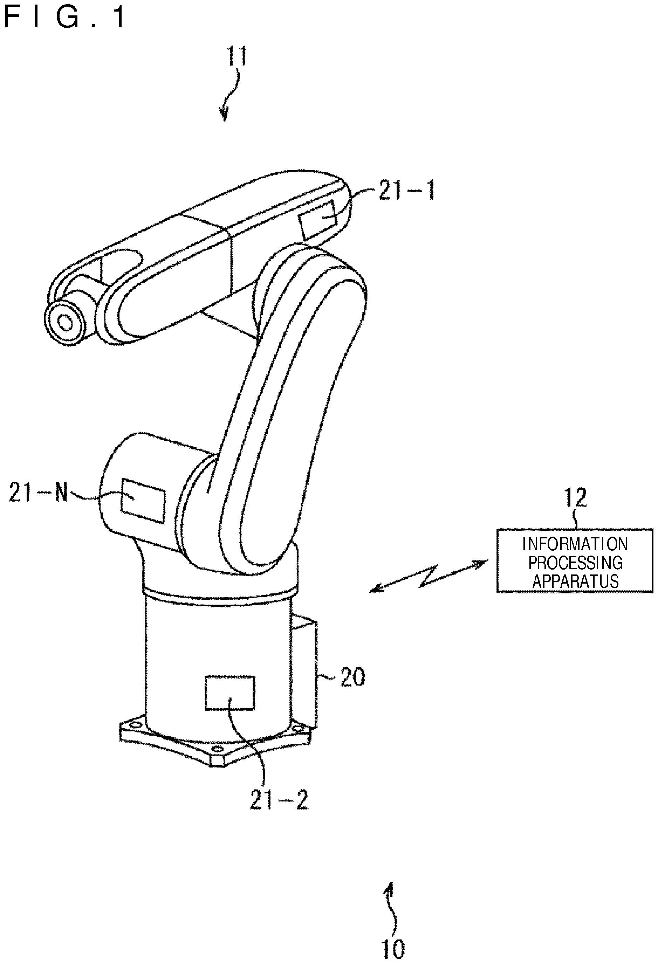

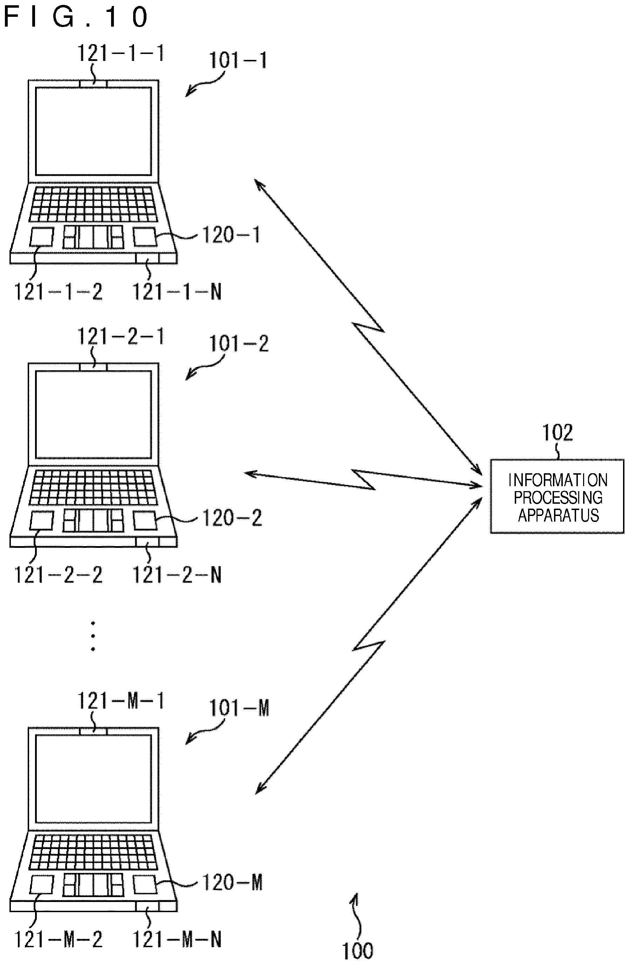

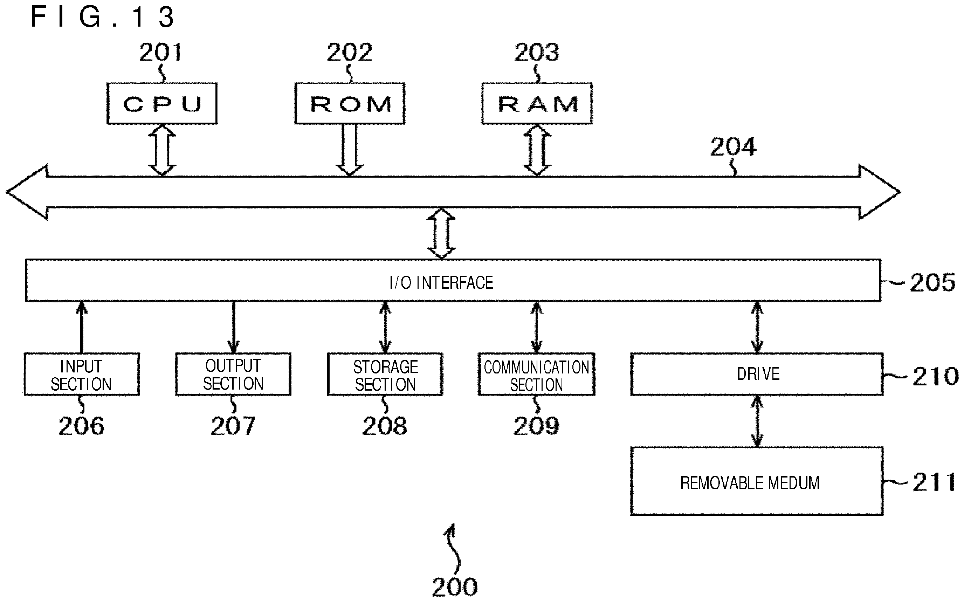

1. First Embodiment: Failure Predicting System (FIG. 1 to FIG. 9)
2. Second Embodiment: Failure Predicting System (FIG. 10 to FIG. 12)
3. Third Embodiment: Computer (FIG. 13)

<First Embodiment>

(Example of Construction of Failure Predicting System)

FIG. 1 is a view depicting an example of a construction of a first embodiment of a failure predicting system to which the present disclosure is applied.

A failure predicting system 10 depicted in FIG. 1 includes an industrial robot 11 and an information processing apparatus 12, and predicts failure probability of the industrial robot 11.

Specifically, the industrial robot 11 has a state observing section 20 which observes a failure state, an operation state and the like of the industrial robot 11. The state observing section 20 transmits the failure state of the industrial robot 11 to the information processing apparatus 12 in response to a demand from the information processing apparatus 12.

Furthermore, N (N is a plural number) sensors 21-1 to 21-N are installed in the individual robot 11. It should be noted that in the following description, the sensors 21-1 to 21-N need not to be especially distinguished from one another, they are collectively referred to as a sensor 21. The sensor 21, for example, includes any one of a temperature sensor, a humidity sensor, an atmospheric pressure sensor, a magnetic sensor, an acceleration sensor, a gyro sensor, a vibration sensor, a sound sensor, and a camera.

The sensor 21 acquires observation information such as temperature information, humidity information, atmospheric pressure information, magnetic field information, acceleration information, vibration information, a sound, and an image. The sensor 21 (transmission apparatus) transmits the observation information to the information processing apparatus 12 in response to a demand from the information processing apparatus 12.

The information processing apparatus 12 selects the sensor 21 which transmits the observation information to be used in the prediction of the failure probability of the industrial robot 11 as a use sensor (use apparatus) from N sensors 21. The information processing apparatus 12 demands the observation information for the use sensor, and receives the observation information transmitted thereto in response to the demand. Furthermore, the information processing apparatus 12 demands the failure state for the state observing section 20, and receives the failure state transmitted thereto in response to that demand.

The information processing apparatus 12 generates a failure prediction model which predicts the failure probability of the industrial robot 11 on the basis of the observation information and the failure state of the use sensor. Furthermore, the information processing apparatus 12 predicts the failure probability of the industrial robot 11 on the basis of the observation information and the failure prediction model of the use sensor, and outputs the failure probability of the industrial robot 11.

It should be noted that although in the first embodiment, it is supposed that the communication between the industrial robot 11 and the information processing apparatus 12 is the wireless communication, the wired communication may also be available.

(Example of Configuration of Information Processing Apparatus)

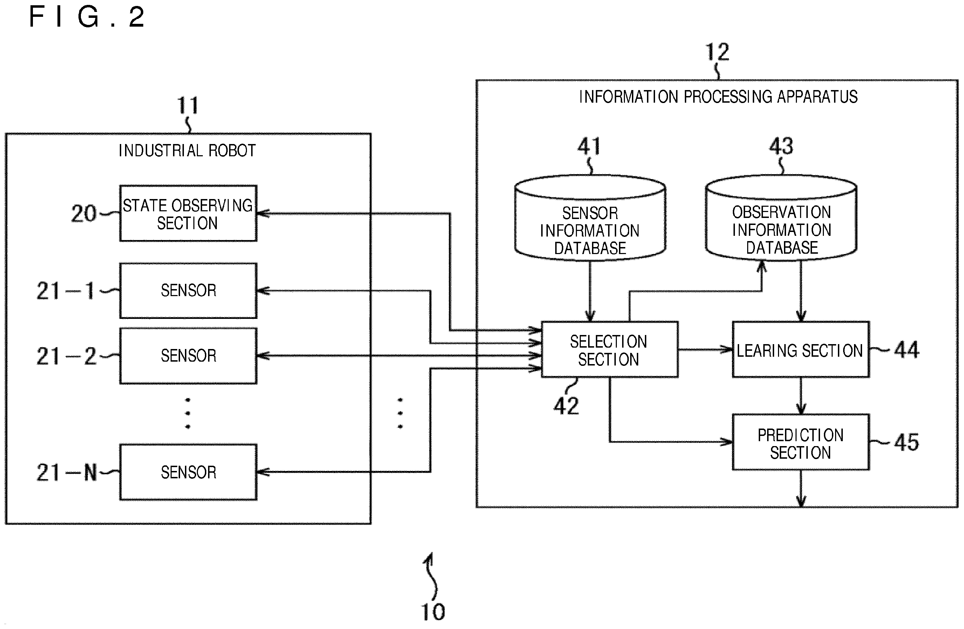

FIG. 2 is a block diagram depicting an example of a configuration of the information processing apparatus 12 depicted in FIG. 1.

The information processing apparatus 12 depicted in FIG. 2 includes a sensor information database 41, a selection section 42, an observation information database 43, a learning section 44, and a prediction section 45.

The sensor information database 41 of the information processing apparatus 12 stores attribute information associated with the sensors 21. A type of sensor 21, position coordinates on the industrial robot 11 of the sensors 21, parts of the industrial robot 11 in which the sensors 21 are installed, an interval at which the sensor 21 acquires the observation information (time resolution of the observation information), a sensitivity of the observation information which the sensor 21 acquires, and the like are present as attribute information of the sensor 21.

The selection section 42 executes processing or the like for demanding the observation information at a predetermined time for all the sensors 21, and acquiring the observation information as standard observation information as preparation processing for selection of the use sensor. The selection section 42 supplies the acquired standard observation information or the like on all the sensors 21 to the observation information database 43.

Furthermore, the selection section 42 selects an initial value of a sensor set S of the use sensors from N sensors 21 on the basis of the standard observation information of all the sensors 21, the attribute information of the sensors stored in the sensor information database 41, and the like. The following three methods, for example, are known as a method of selecting the initial value of the sensor set S.

A first selection method is a method with which the sensors 21 are clustered into a plurality of clusters on the basis of the attribute information, and the sensor set including one sensor 21 selected from each of the clusters as the use sensor is set as the initial value of the sensor set S.

A second selection method is a method with which, for example, the sensors 21 in which the time changes of the standard observation information are identical to each other are clustered into the same cluster on the basis of the standard observation information of the sensors 21, and the sensor set including one sensor 21 selected from each of the clusters as the use sensor is set as the initial value of the sensor set S.

A third selection method is a method with which the sensor set including the sensor 21 in which the standard observation information of each of the sensors 21, and failure information (details will be described later) corresponding to the standard observation information have a high degree of relativity as the use sensor is set as the initial value of the sensor set S. In the case where the third selection method is used, in the preparation processing, the failure state is demanded for the state observing section 20, and the failure information is generated every standard observation information associated with the basis of the failure state transmitted in response to the demand. Then, the failure information is used in the selection of the initial value of the sensor set S.

It should be noted that the failure information of each of the pieces of observation information is information indicating whether or not the failure of the industrial robot 11 occurred within six hours after the observation information was observed. For example, in the case where the failure information indicates that the failure of the industrial robot 11 occurred within six hours after the observation information was observed, the failure information is 1. On the other hand, in the case where the failure information indicates that the failure of the industrial robot 11 did not occur within six hours after the observation information was observed, the failure information is 0. The first to third selection methods may be combined with each other.

The selection section 42 demands the observation information for each 10 minutes for the use sensor. The selection section 42 supplies the observation information for each 10 minutes transmitted thereto from the use sensor in response to the demand to each of the observation information database 43 and the prediction section 45. Furthermore, the selection section 42 updates the sensor set S selected from N sensors 21 on the basis of the observation information and the failure information of the use sensor, the contribute information of the sensors 21, and the like. The selection section 42 supplies the use sensor information indicating the use sensor included in the sensor set S to the learning section 44.

Furthermore, the selection section 42 demands the failure state for the state observing section 20, and acquires the failure state transmitted thereto from the state observing section 20 in response to the demand. The selection section 42 generates the failure information every observation information of the use sensors on the basis of the failure state. The selection section 42 supplies the generated failure information to the observation information database 43.

The observation information database 43 stores the observation information and the standard observation information of the use sensor which are supplied from the selection section 42. Furthermore, the observation information database 43 stores the failure information for each observation information of each of the use sensors which is supplied from the selection section 42 in a state in which the failure information is associated with the observation information.

The learning section 44 reads out the observation information for each 10 minutes of the use sensor which is stored in the observation information database 43, and the failure information associated with the observation information based on information of the use sensor which are supplied from the selection section 42, and sets the observation information and the failure information as learning data $D_{BL}$ for failure prediction. The learning data $D_{BL}$ for failure prediction can be expressed by following Expression (1).

[Math. 1]

$$D_{BL} = \{ (x_i,\ y_i) \mid i = 1,\ 2,\ ...\} \qquad ... \ (1)$$

$x_i$ is i-th (i = 1, 2, ...) observation information for 10 minutes of each of the use sensors, and $y_i$ is the failure information corresponding to the observation information $x_i$. It should be noted that periods of time for 10 minutes corresponding to the observation information $x_i$ and the observation information $x_j$ (i ≠ j) do not overlap each other. The learning section 44 machine-learns a parameter of the failure prediction model in accordance with a machine-learning algorithm such as Stochastic Gradient Descent by using the learning data $D_{BL}$ for the failure prediction.

The failure prediction model is a function model f(x ; w) having a parameter w with the observation information x for 10 minutes of the use sensor as an input, and with a predicted value f of the failure probability within six hours of the industrial robot 11 as an output. A logistic regression model, a Convolutional Neural Network or the like can be used as the failure prediction model f(x ; w). The learning section 44 supplies the learned parameter w to the prediction section 45.

The prediction section 45 calculates the predicted value f of the failure probability within six hours of the industrial robot 11 in accordance with the failure prediction model f(x ; w) by using the parameter w supplied from the learning section 44, and the observation information x of the use sensor supplied thereto from the selection section 42, and outputs the resulting predicted value f.

(Description of Processing in Information Processing Apparatus)

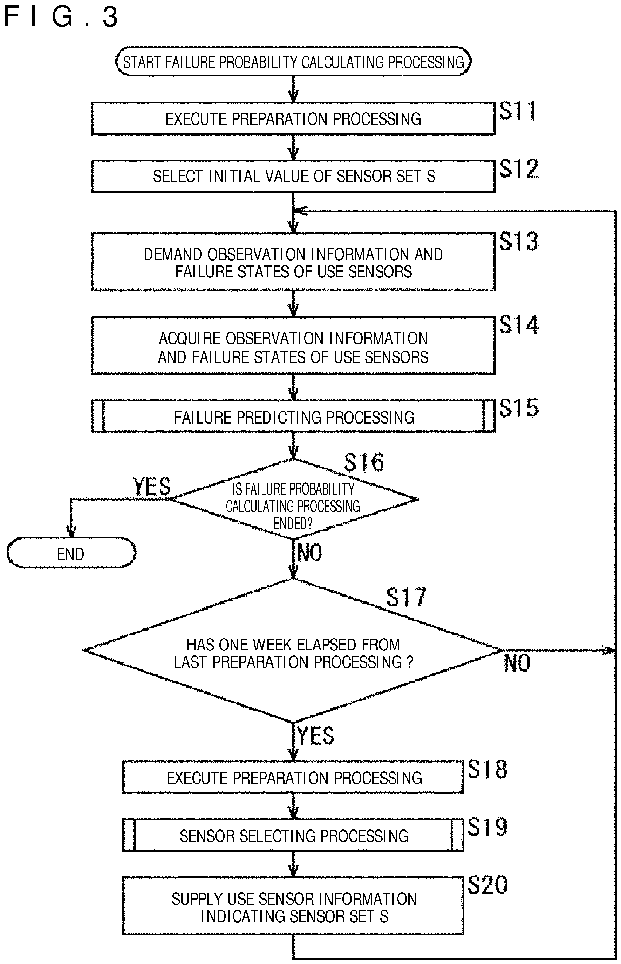

FIG. 3 is a flow chart explaining failure probability calculating processing in the information processing apparatus 12 depicted in FIG. 2.

In Step S11 of FIG. 3, the selection section 42 executes processing for preparing the selection of the use sensor. Specifically, the selection section 42, for example, demands the observation information at the predetermined time for all the sensors 21, and receives the observation information at the predetermined time transmitted thereto from all the sensors 21 in response to the demand. Then, the selection section 42 supplies the received observation information of all the sensors 21 as the standard observation information to the observation information database 43, and causes the observation information database 43 to store the standard observation information.

In Step S12, the selection section 42 selects the initial value of the sensor set S of the use sensors from N sensors 21. The selection section 42 supplies use sensor information indicating the sensors 21 included in the initial value of the sensor set S as the use sensors to the learning section 44.

In Step S13, the selection section 42 demands the observation information of the use sensors for the use sensors included in the sensor set S, and demands the failure state for the state observation section 20.

In Step S14, the selection section 42 acquires the observation information transmitted thereto from the use sensors in response to the demand by the processing in Step S13, and the failure state transmitted thereto from the state observing section 20. The selection section 42 supplies the observation information of the use sensors thus acquired to each of the observation information database 43 and the prediction section 45. Furthermore, the selection section 42 generates the failure information for each observation information of each of the use sensors on the basis of the acquired failure state, and supplies the resulting failure information to the observation information database 43 on the basis of the acquired failure state. As a result, the observation information database 43 stores the observation information of the use sensors supplied from the selection section 42, and the failure information corresponding to the observation information in a state in which the observation information are associated with the failure information.

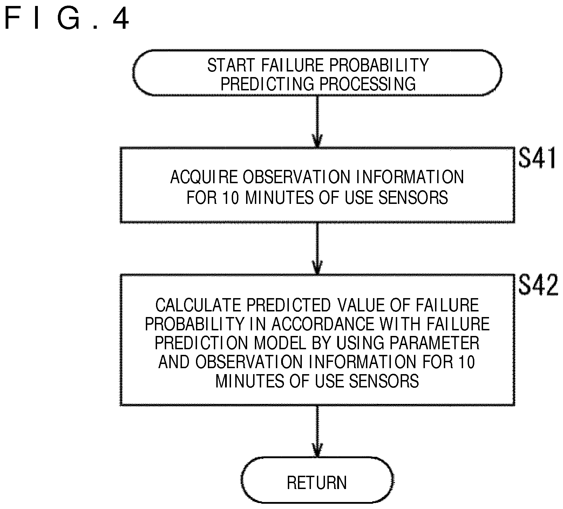

In Step S15, the prediction section 45 executes failure predicting processing for calculating the predicted value f of the failure probability on the basis of the observation information x for 10 minutes which is supplied thereto from the selection section 42. Details of the failure predicting processing will be described later with reference to FIG. 4.

In Step S16, the information processing apparatus 12 decides whether or not the failure probability calculating processing is ended. In the case where it is decided in Step S16 that the failure probability calculating processing is not ended, the processing proceeds to Step S17.

In Step S17, the selection section 42 decides whether or not one week has elapsed from the last preparation processing. It should be noted that an interval of the preparation processing is by no means limited to one week. In the case where the selection section 42 decides in Step S17 that one week has not yet elapsed from the last preparation processing, the processing is returned back to Step S13, and until one week has elapsed from the last preparation processing, the processing from Step S13 to Step S17 is repetitively executed.

On the other hand, in the case where the selection section 42 decides in Step S17 that one week has elapsed from the last preparation processing, in Step S18, the selection section 42 executes the processing for selecting the use sensor.

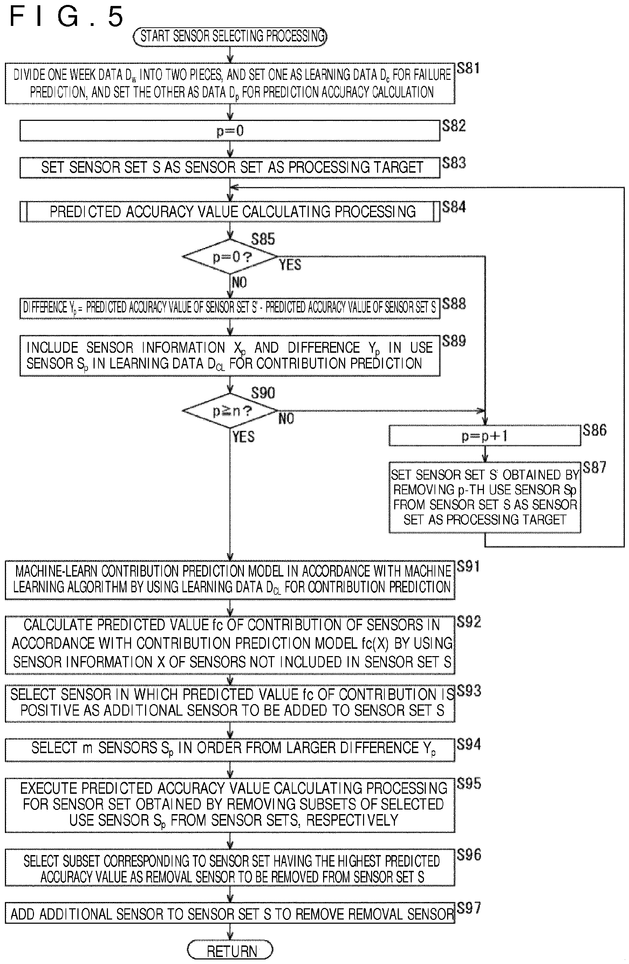

In Step S19, the selection section 42 executes sensor selecting processing for selecting the sensor set S of the use sensors from N sensors 21. Details of the sensor selecting processing will be described later with reference to FIG. 5.

In Step S20, the selection section 42 supplies the use sensor information indicating the sensor set S selected by the processing in Step S19 to the learning section 44. Then, the processing is returned back to Step S13, and the processing in and after Step S13 is repetitively executed.

FIG. 4 is a flow chart explaining the failure predicting processing in Step S15 of FIG. 3.

In Step S41 of FIG. 4, the prediction section 45 acquires the observation information for 10 minutes of the use sensors which is supplied thereto from the selection section 42.

In Step S42, the prediction section 45 calculates the predicted value f of the failure probability within six hours of the industrial robot 11 in accordance with the failure prediction model f(x ; w) by using the parameter w supplied from the learning section 44, and the observation information x acquired in Step S41. The prediction section 45 outputs the calculated predicted value f of the failure probability. Then, the processing is returned back to Step S15 of FIG. 3, and proceeds to Step S16.

FIG. 5 is a flow chart explaining the sensor selecting processing in Step S19 of FIG. 3.

In Step S81 of FIG. 5, the selection section 42 divides one week data $D_w$ consisting of the observation information $x_i$ for each 10 minutes of the use sensors for one week which is acquired in Step S14, and the failure information $y_i$ corresponding to the observation information $x_i$ into two pieces of data. Then, the selection section 42 sets one of the two pieces of data as learning data $D_c$ for the failure prediction, and sets the other as data $D_p$ for prediction accuracy calculation.

In Step S82, the selection section 42 sets p to 0.

In Step S83, the selection section 42 sets the sensor set S as the sensor set as the processing target.

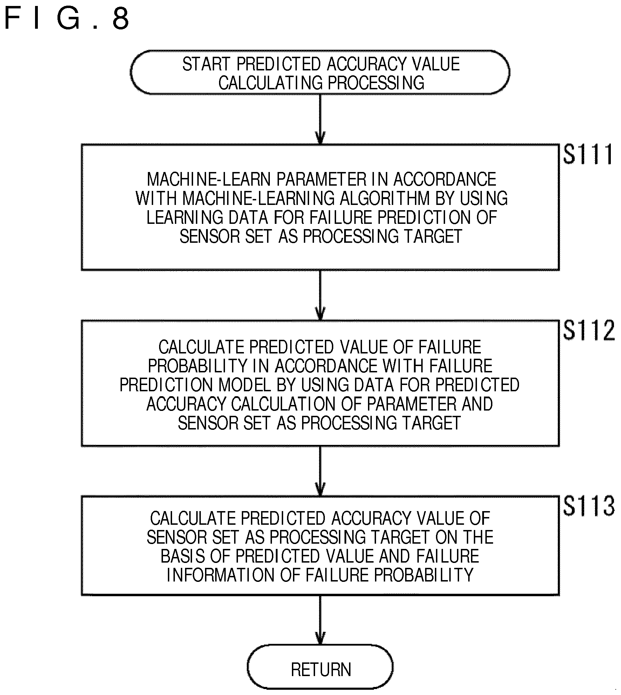

In Step S84, the selection section 42 executes predicted accuracy value calculating processing for calculating a predicted accuracy value for the prediction of the failure probability using the observation information which is transmitted thereto from the sensor set as the processing target. Details of the predicted accuracy value calculating processing will be described later with reference to FIG. 8.

In Step S85, the selection section 42 decides whether or not p is 0. In the case where the selection section 42 decides in Step S85 that p is 0, the processing proceeds to Step S86.

In Step S86, the selection section 42 increments p by 1. In Step S87, the selection section 42 sets a sensor set S' obtained by removing p-th use sensor $S_p$ from the sensor set S as a sensor set as the processing target, and processing is returned back to Step S84.

On the other hand, in the case where the selection section 42 decides in Step S85 that p is not 0, in Step S88, the selection section 42 calculates a difference $Y_p$ obtained by subtracting the predicted accuracy value of the sensor set S from the predicted accuracy value of the sensor set S'. The selection section 42 holds the difference $Y_p$ in a state in which the difference $Y_p$ is associated with the sensor set S.

In Step S89, the selection section 42 includes sensor information $X_p$ (teacher information) of a use sensor $S_p$ as a sensor for a teacher (a transmission apparatus for a teacher), and the difference $Y_p$ in learning data $D_{CL}$ for contribution prediction. The sensor information is information associated with the sensor 21 and generated every sensor 21. Specifically, the sensor information of the sensors 21 includes at least one of the attribute information of the sensor 21 of interest, the degree of association with other use sensor, the degree of association with the sensor 21 which contributed to the prediction of the failure probability in the past in the sensor set S, or the degree of association with the sensor 21 which did not contribute to the prediction of the failure probability in the past in the sensor set S.

The degree of association with other use sensors, for example, is the degree of correlation in time change between a normalized value of the observation information of the sensor 21 corresponding to the sensor information and included in the standard observation information, and a normalized value of the observation information of the use sensor included in the sensor set S other than the sensor 21 of interest.

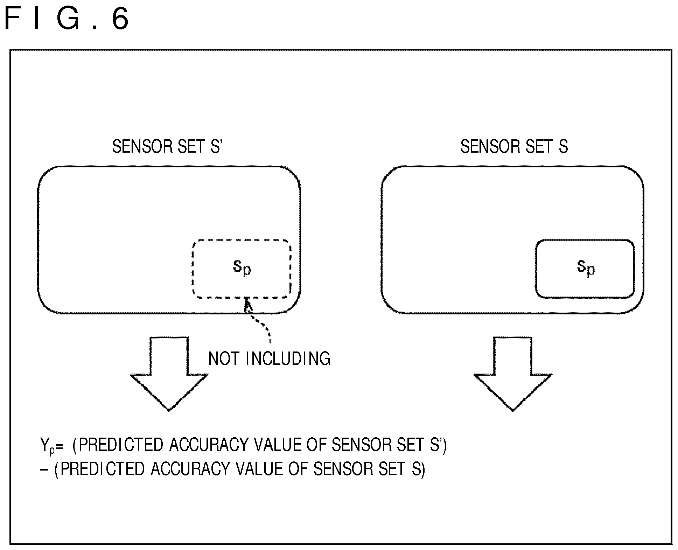

Furthermore, as depicted in FIG. 6, the sensor set S' is a sensor set obtained by removing the use sensor $S_p$ from the sensor set S. Therefore, in the case where the difference $Y_p$ is positive, the use sensor $S_p$ is not preferably used in the prediction of the failure probability. That is, in this case, the use sensor $S_p$ is a sensor which does not contribute to the prediction of the failure probability. On the other hand, in the case where the difference $Y_p$ is negative, the use sensor $S_p$ is preferably used in the prediction of the failure probability. That is, in this case, the use sensor $S_p$ is a sensor which contributes to the prediction of the failure probability.

Therefore, the degree of association with the use sensor which contributed to the prediction of the failure probability in the past in the sensor set S, for example, is an average value of the degrees of correlation representing the degree of similarity in time change between the normalized value of the observation information of the sensor 21 corresponding to the sensor information and included in the standard observation information, and the normalized value of the observation information of the use sensors $S_p$ in which the past difference $Y_p$ held so as to be associated with the sensor set S is negative.

Furthermore, the degree of association with the use sensor which was not contributed to the prediction of the failure probability in the past in the sensor set S, for example, is an average value of the degrees of correlation representing the degree of similarity in time change between the normalized value of the observation information of the sensor 21 corresponding to the sensor information and included in the standard observation information, and the normalized value of the observation information of the use sensors $S_p$ in which the past difference $Y_p$ held so as to be associated with the sensor set S is positive.

In Step S90, the selection section 42 decides whether or not p is equal to or larger than the number, n, of use sensors included in the sensor set S. In the case where the selection section 42 decides in Step S90 that p is smaller than the number, n, of use sensors included in the sensor set S, the processing proceeds to Step S86, and the processing described above is executed.

On the other hand, in the case where the selection section 42 decides in Step S90 that p is equal to or larger than the number, n, of use sensors included in the sensor set S, the processing proceeds to Step S91.

In Step S91, the selection section 42 machine-learns a contribution prediction model in accordance with a machine-learning algorithm by using the learning data $D_{CL}$ for the contribution prediction. The contribution prediction model is a function model $f_c(X)$ with the sensor information X of the sensors 21 not included in the sensor set S as the input, and with the predicted value $f_c$ of the contribution to the prediction of the failure probability of the sensor 21 when the sensor 21 of interest is added to the sensor set S as the output. It should be noted that the predicted value $f_c$ of the contribution is positive in the case where the predicted value $f_c$ of the contribution contributes to the prediction of the failure probability, and is negative in the case where the predicted value $f_c$ of the contribution does not contribute to the prediction of the failure probability.

In Step S92, the selection section 42 calculates the predicted value $f_c$ of the contribution of the sensors 21 (a plurality of transmission apparatuses) in accordance with the contribution prediction model $f_c(X)$ by using the sensor information X of the sensors 21 not included in the sensor set S.

In Step S93, the selection section 42 selects the sensor 21 in which the predicted value $f_c$ of the contribution is positive as an additional sensor as the use sensor to be added to the sensor set S on the basis of the predicted value $f_c$ of the contribution calculated in Step S92. It should be noted that an upper limit of the number of sensors 21 which can be added to the sensor set S may be previously determined. In this case, the selection section 42 selects the sensors 21 as the additional sensors in order from the larger predicted value $f_c$ of the contribution by only the number of sensors 21 up to the upper limit.

In Step S94, the selection section 42 selects m (m < n) use sensors $S_p$ in order from the larger difference $Y_p$ calculated in Step S88.

In Step S95, the selection section 42 executes the predicted accuracy value calculating processing similarly to the case of the processing in Step S84 with the sensor set obtained by removing the subsets of m use sensors selected in Step S94 from the sensor set S as the sensor sets as the processing target.

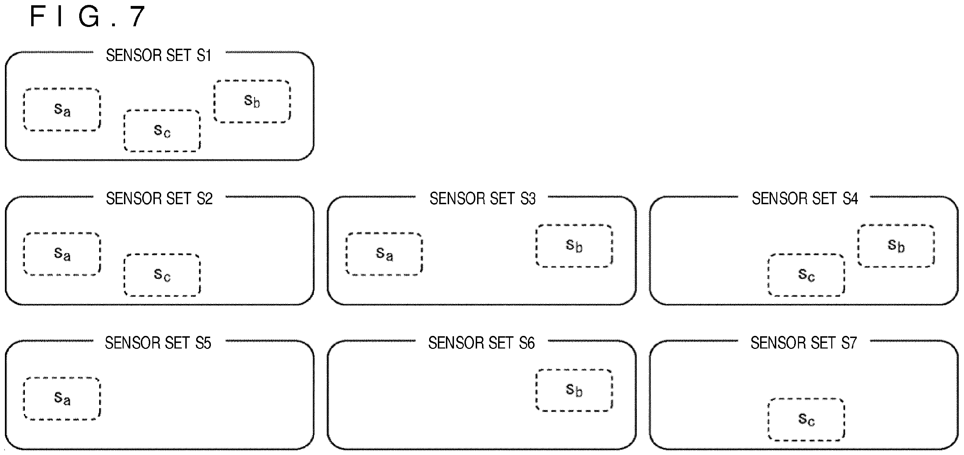

For example, in the case where m is 3, when three use sensors $S_p$ are set as use sensors $s_a$, $s_b$ and $s_c$, respectively, the subset of the use sensors $s_a$, $s_b$, and $s_c$, as depicted in FIG. 7, are $(s_a, s_b, s_c)$, $(s_a, s_c)$, $(s_a, s_b)$, $(s_b, s_c)$, $(s_a)$, $(s_b)$, and $(s_c)$. Therefore, the selection section 42 executes the predicted accuracy value calculating processing with a sensor set S1 obtained by removing $(s_a, s_b, s_c)$ from the sensor set S, a sensor set S2 obtained by removing $(s_a, s_c)$ from the sensor set S, a sensor set S3 obtained by removing $(s_a, s_b)$ from the sensor set S, a sensor set S4 obtained by removing $(s_b, s_c)$ from the sensor set S, a sensor set S5 obtained by removing $(s_a)$ from the sensor set S, a sensor set S6 obtained by removing $(s_b)$ from the sensor set S, and a sensor set S7 obtained by removing $(s_c)$ from the sensor set S as the sensor sets as the processing target. It should be noted that in FIG. 7, a dotted line represents the use sensor which is not included in the sensor set.

In Step S96, the selection section 42 selects a subset corresponding to the sensor set in which the predicted accuracy value calculated in the predicted accuracy value calculating processing in Step S95 is highest as the removal sensor as the use sensor which is to be removed from the sensor set S.

In Step S97, the selection section 42 adds the additional sensor selected in Step S93 to the sensor set S, and removes the removal sensor selected in Step S96, thereby selecting a new sensor set S selected in Step S96, thereby selecting a new sensor set S from N sensors 21. Then, the processing is returned back to Step S19 of FIG. 3, and proceeds to Step S20.

Incidentally, in the case where the number of sensors 21 not included in the sensor set S is large, the selection section 42 may cluster the sensor 21 of interest into a plurality of clusters on the basis of the sensor information, and may select the additional sensor on the basis of the predicted value $f_c$ of the contribution of one sensor 21 representative of the clusters. In this case, the selection section 42, for example, sets all the sensors 21 included in the cluster represented by the sensor 21 in which the predicted value $f_c$ of the contribution is positive as the additional sensors. It should be noted that the selection section 42 may calculate the predicted values $f_c$ of the contribution of the sensors included in the cluster represented by the sensor 21 in which the predicted value $f_c$ of the contribution is positive, and may set only the sensors in which the predicted value $f_c$ are positive as the additional sensors 21.

FIG. 8 is a flow chart explaining the predicted accuracy value calculating processing in Step S84 of FIG. 5.

In Step S111 of FIG. 8, the selection section 42 machine-learns the parameter w in accordance with the machine-learning algorithm by using the learning data for failure prediction of the sensor set as the processing target. Incidentally, the learning data for failure prediction of the sensor set as the processing target means the observation information $x_i$ and the failure information $y_i$ of the use sensor included in the sensor set as the processing target of the learning data $D_c$ for failure prediction including the observation information $x_i$ and the failure information $y_i$ of the use sensor included in the sensor set S and generated in Step S81 of FIG. 5.

In Step S112, the selection section 42 calculates the predicted value f of the failure probability within six hours of the industrial robot 11 in accordance with the failure prediction model f(x ; w) by using the parameter w machine-learned in Step S111, and the data for predicted accuracy calculation for 10 minutes of the sensor set as the processing target.

Incidentally, the data for the predicted accuracy calculation of the sensor set as the processing target means the observation information $x_i$ and the failure information $y_i$ of the use sensor included in the sensor set as the processing target of the data for the predicted accuracy calculation including the observation information $x_i$ and the failure information $y_i$ of all the use sensors included in the sensor set S and generated in Step S81 of FIG. 5.

In Step S113, the selection section 42 calculates a predicted accuracy value (evaluation value) of the prediction of the failure probability using the observation information of the sensor set as the processing target on the basis of the predicted value f of the failure probability calculated in Step S112, and failure information yi of the data for predicted accuracy calculation for 10 minutes which is used in calculation of the predicted value f. It should be noted that in this case, it is supposed that the larger the predicted accuracy, the larger the predicted accuracy value. After the processing in Step S113, the processing is returned back to Step S84 of FIG. 5, and proceeds to Step S85.

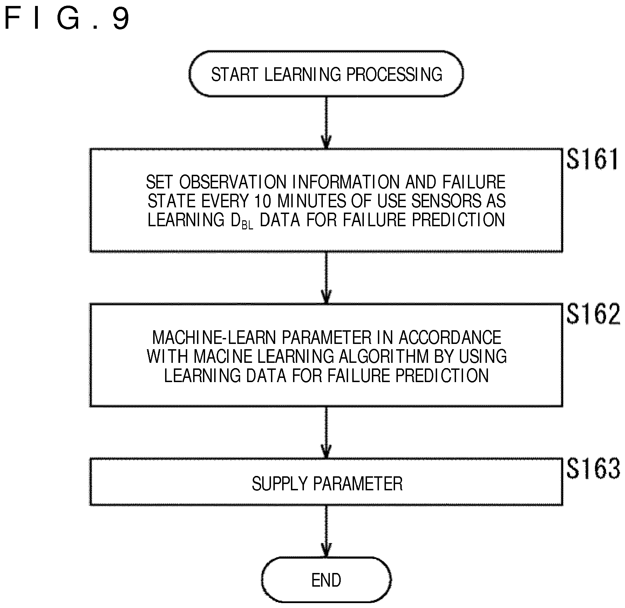

FIG. 9 is a flow chart explaining learning processing in the learning section 44 of FIG. 2. This learning processing, for example, is executed every predetermined time (for example, every 24 hours) for a period of time from after the first processing in Step S14 of FIG. 3 to the end of the failure probability calculating processing.

In Step S161 of FIG. 9, the learning section 44 reads out the observation information $x_i$ for each 10 minutes of the use sensors which is stored in the observation information database 43, and the failure information $y_i$ associated with the observation information $x_i$, and the failure information $y_i$ and sets the observation information $x_i$ as the learning data $D_{BL}$ for failure prediction.

In Step S162, the learning section 44 machine-learns the parameter w of the failure prediction model f(x ; w) in accordance with the machine-learning algorithm by using the learning data $D_{BL}$ for the failure prediction.

In Step S163, the learning section 44 supplies the parameter w which is machine-learned in Step S162 to the prediction section 45, and the processing is ended.

As described above, the information processing apparatus 12 selects the use sensor from N sensors 21 on the basis of the information associated with N sensors 21. Therefore, the information processing apparatus 12 can readily select the sensor 21 which transmits the observation information necessary and sufficient for the prediction of the failure probability as the use sensor regardless of the prior knowledge for the prediction field of the human being such as the user or designer of the failure prediction system 10, or the failure prediction system 10.

Furthermore, the information processing apparatus 12 predicts the failure probability by using only the observation information of the use sensor, thereby enabling the production accuracy of the prediction of the failure probability to be enhanced as compared with the case where the failure probability is predicted by using the observation information associated with all N sensors 21. Furthermore, the information processing apparatus 12 can also reduce the arithmetic operation in the prediction of the failure probability, and the consumption of the resource of the communication with the sensor 21.

Furthermore, since the information processing apparatus 12 periodically updates the use sensor, even when the environment or situation of the industrial robot 11 is changed, the information processing apparatus 12 can usually set the sensor 21 which transmits the observation information necessary and sufficient for the prediction of the failure probability as the use sensor.

Furthermore, in the case where the information processing apparatus 12 notifies the user of the failure predicting system 10 of the sensor information associated with the sensor 21 selected as the use sensor, the user of the failure predicting system 10 can know a primary factor of the failure on the basis of the sensor information.

It should be noted that in the case where the number, N, of sensors 21 is large, the selection section 42 may cluster N sensors 21 into a plurality of clusters on the basis of the attribute information of the sensors 21, or the like, and may select the sensors 21 in units of the clusters as the use sensors.

<Second Embodiment>

(Example of Configuration of Failure Predicting System)

FIG. 10 is a view of an example of a configuration of a second embodiment of the failure predicting system to which the present disclosure is applied.

A failure predicting system 100 depicted in FIG. 10 includes M (M is a plural number) personal computers (hereinafter, referred to as PCs) 101-1 to 101-M (apparatuses) and an information processing apparatus 102, and predicts the failure probability of M PC 101-1 to 101-M.

Specifically, the PC 101-k (k = 1, 2, ..., M) has a state observing section 120-k which observes a failure state, an operation state, and the like of the PC 101-k. The state observing section 120-k transmits the failure state of the PC 101-k to the information processing apparatus 102 in response to a demand from the information processing apparatus 102. Furthermore, N sensors 121-k-1 to 121-k-N are installed in the PC 101-k.

It should be noted that hereinafter, in the case where the PCs 101-1 to 101-M need not to be especially distinguished from one another, the PCs 101-1 to 101-M are collectively referred to as the PC 101. Furthermore, in the case where the state observing sections 120-1 to 120-M need not to be especially distinguished from one another, the state observing sections 120-1 to 120-M are collectively referred to as the state observing section 120.

Furthermore, in the case where the sensors 121-1-1 to 121-1-N, the sensors 121-2-1 to 121-2-N, ..., and the sensors 121-M-1 to 121-M-N need not to be especially distinguished from one another, they are collectively referred to as the sensor 121.

The sensor 121, for example, includes any one of a temperature sensor, a humidity sensor, an atmospheric pressure sensor, a magnetic sensor, an acceleration sensor, a gyro sensor, a vibration sensor, a sound sensor, and a camera. It should be noted that the pieces of attribute information between the sensors 121-k-1 two by two of the PCs 101 are identical to each other. Likewise, the pieces of attribute information between the sensors 121-k-2 two by two of the PCs 101 are identical to each other. The pieces of attribute information between the sensors 121-k-3 two by two of the PCs 101 are identical to each other. In addition, the pieces of attribute information between the sensors 121-k-N two by two of the PCs 101 are identical to each other. As far as the attribute information of the sensor 121, there are a kind of sensor 121, the position coordinates on the PC 101 of the sensor 121, parts of the PC 101 in which the sensor 121 is installed, an interval at which the sensor 121 acquires the observation information (the time resolution of the observation information), the sensitivity of the observation information which the sensor 121 acquires, and the like.

Incidentally, in the following description, in the case where the sensors 121-k-1, the sensors 121-k-2, ..., the sensor 121-k-N which have the same attribute information need not to be especially distinguished from each other, they are collectively referred to as the sensor 121-1, the sensor 121-2, ..., the sensor 121-N, respectively.

The sensor 121 acquires the observation information such as temperature information, humidity information, atmospheric pressure information, magnetic field information, acceleration information, vibration information, a sound, and an image. The sensor 121 (transmission apparatus) transmits the observation information to the information processing apparatus in response to a demand from the information processing apparatus 102.

The information processing apparatus 102 selects the sensor 121 used in the prediction of the failure probability of the PCs 101 as the use sensor from N sensors 121-1 to 121-N. The use sensor is common to all the PCs 101. The information processing apparatus 102 demands the observation information for the use sensor every PC 101, and receives the observation information which is transmitted thereto in response to the demand. Furthermore, the information processing apparatus 102 demands the failure state for the state observating section 120 every PC 101, and receives the failure state which is transmitted thereto in response to the demand.

The information processing apparatus 102, similarly to the case of the information processing apparatus 12, generates the failure prediction model common to all the PCs 101 on the basis of the observation information and the failure state of the use sensors of all the PCs 101. Furthermore, the information processing apparatus 102 predicts the failure probability of the PC 101 on the basis of the observation information and the failure prediction model of the use sensor every PC 101, and outputs the resulting failure probability of the PC 101.

It should be noted that although in the second embodiment, it is supposed that the communication between the PC 101 and the information processing apparatus 102 is the wireless communication, the wired communication may also be available.

(Example of Configuration of Information Processing Apparatus)

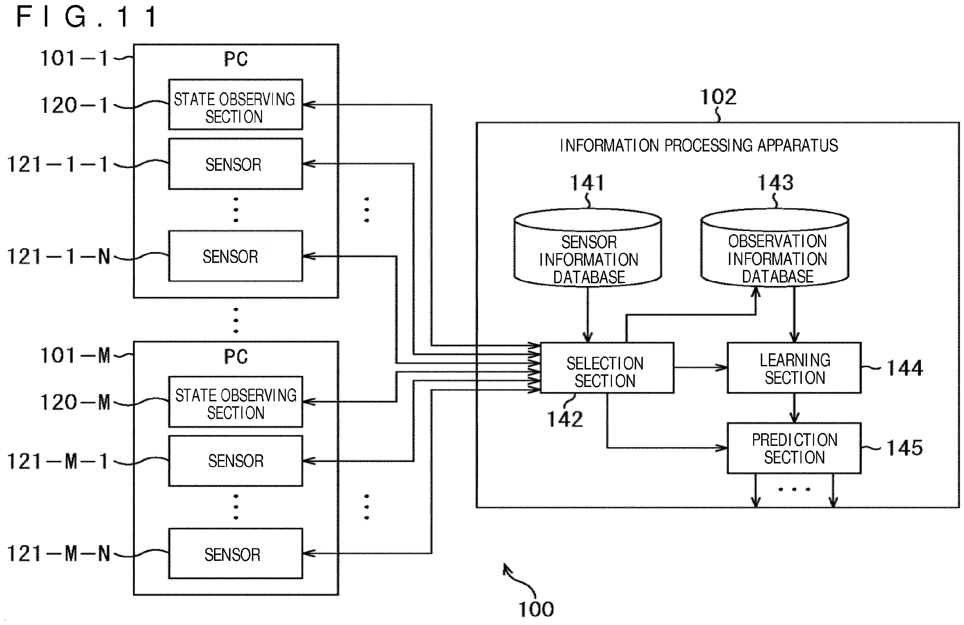

FIG. 11 is a block diagram depicting an example of a configuration of the information processing apparatus 102 depicted in FIG. 10.

In the configuration depicted in FIG. 11, the same constituent elements as those in FIG. 2 are designated by the same reference numerals, respectively. A repeated description is suitably omitted here.

The information processing apparatus 102 depicted in FIG. 11 includes a sensor information database 141, a selection section 142, an observation information database 143, a leaning section 144, and a prediction section 145.

The sensor information database 141 of the information processing apparatus 102 stores the attribute information of the sensors 121-1 to 121-N.

The selection section 142, similarly to the case of the selection section 42 of FIG. 2, executes the preparation processing for selection of the use sensors. The selection section 142 arranges the observation information of all the sensors 121 of all the PCs 101 which is acquired in the preparation processing every sensor 121-h (h = 1, 2, ..., N) to be set as the standard observation information of the sensors 121-h, and supplies the standard observation information to the observation information database 143.

Furthermore, the selection section 142, similarly to the case of the selection section 42, selects the initial value of the same sensor set S with respect to all the PCs 101 from N sensors 121-1 to 121-N on the basis of the standard observation information of all the sensors 121-h, the attribute information of the sensors 121-h stored in the sensor information database 141, and the like. That is, one element of the sensor set S is the sensor 121-h of all the PCs 101.

The selection section 142 demands the observation information for each 10 minutes for the use sensors of the PCs 101. The selection section 142 supplies the observation information for each 10 minutes which is transmitted thereto from the use sensors of the PCs 101 in response to the demand to each of the observation information database 143 and the prediction section 145. Furthermore, the selection section 142, similarly to the case of the selection section 42, executes the sensor selecting processing (FIG. 5), and newly selects the same sensor set S with respect to all the PCs 101 from N sensors 121.

It should be noted that the sensor information used in the sensor selecting processing in the selection section 142 is information associated with the sensor 121-h and generated every sensor 121-h. Specifically, the sensor information of the sensors 121-h includes at least one of the attribute information of the sensors 121-h, and the average value in all the PCs 101 of the degree of association of the sensor 121-h of interest with other use sensors, the degree of association with the sensor 121 which contributed to the prediction of the failure probability in the past in the sensor set S, or the degree of association with the sensor 121 which did not contribute to the prediction of the failure probability in the past in the sensor set S. The selection section 142 supplies the use sensor information indicating the use sensor included in the sensor set S to the learning section 144.

Furthermore, the selection section 142 demands the failure state for the state observing sections 120, and acquires the failure state which is transmitted from the state observing sections 120 in response to the demand. The selection section 142 generates the failure information for each observation information of the use sensors on the basis of the failure state acquired from the state observing section 120 of the PC 101 every PC 101.

Furthermore, the selection section 142 generates failure information for frequency decision for each the observation information of the use sensors on the basis of the failure state acquired from the state observing section 120 of the PC 101 every the PC 101. It should be noted that the failure information for the frequency decision for each the observation information of the use sensors is information indicating whether or not the failure of the PC 101 occurred within 24 hours after that observation information was observed. The failure information for the frequency decision, for example, is 1 in the case where failure information for the frequency decision indicates that the failure of the PC 101 occurred within 12 hours after that observation information was observed, and is 0 in the case where the failure information for the frequency decision indicates that the failure of the PC 101 did not occur within 12 hours after the observation information was observed. The selection section 142 supplies the generated failure information and the failure information for the frequency decision to the observation information database 143.

The observation information database 143 stores the observation information and the standard observation information of the use sensors of all the PCs 101 which are supplied from the selection section 142. Furthermore, the observation information database 143 stores the failure information and the failure information for the frequency decision for each observation information of the use sensor of the PC 101 every PC 101 in a state in which the failure information and the failure information for the frequency decision are associated with the observation information of interest.

The learning section 144 reads out the observation information for each 10 minutes of the user sensors of all the PCs 101 stored in the observation information database 143, and the failure information associated with the observation information of interest on the basis of the use sensor information supplied thereto from the selection section 142, and sets the information thus read out as learning data $D_{BL}$ for failure prediction.

The learning section 144, similarly to the case of the learning section 44, machine-learns the parameter w of the failure prediction model f(x ; w) common to all the PC 101 in accordance with the machine-learning algorithm by using the learning data $D_{BL}$ for the failure prediction. The learning section 144 supplies the parameter w thus machine-learned to the prediction section 145.

Furthermore, the learning section 144 reads out the observation information for each 10 minutes of the use sensors of all the PCs 101 stored in the observation information database 143, and the failure information for the frequency decision associated with the observation information of interest on the basis of the use sensor information, and sets the information thus read out as the learning data for the frequency decision. The learning section 144 machine-learns the parameter of the failure prediction model for the frequency decision common to all the PCs 101 in accordance with the machine-learning algorithm such as Stochastic Gradient Descent by using the learning data for the frequency decision.

The failure prediction model for the frequency decision is a function model f'(x ; w') having a parameter w' with observation information x for 10 minutes of the use sensor as an input, and with a parameter value f' of the failure probability within 24 hours of the PC 101 as an output. A logistic regression model, a Convolutional Neural Network or the like can be used as the failure prediction model f' (f ; w'). The learning section 44 supplies the learned parameter w' to the prediction section 145.

The prediction section 145 calculates the predicted value f' of the failure probability within 24 hours of the PC 101 in accordance with the failure prediction model f' (x ; w') for the frequency decision by using the observation information x and the parameter w of the use sensor of the PC 101 every the PC 101. The prediction sensor 145 decides the frequency at which the predicted value f of the failure probability within six hours on the basis of the calculated predicted value f' of the failure probability.

The prediction section 145 calculates the predicted value f of the failure probability within six hours of the PC 101 in accordance with the failure prediction model f(x ; w) by using the parameter w and the observation information x of the use sensor of the PC 101 at the decided frequency every PC 101. The prediction section 145 outputs the calculated predicted value f of the failure probability of the PC 101.

It should be noted that although in the second embodiment, the failure prediction model for frequency decision is set as being different from the failure prediction model, the failure prediction model for the frequency decision and the failure prediction model may also be identical to each other.

(Description of Processing in Information Processing Apparatus)

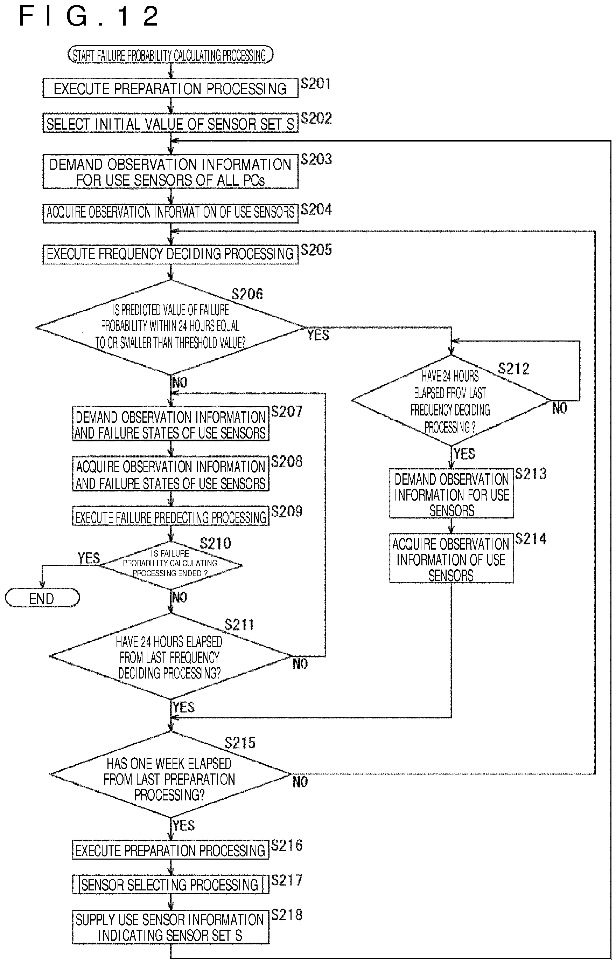

FIG. 12 is a flow chart explaining the failure probability calculating processing in the information processing apparatus 102 depicted in FIG. 11.

In Step S201 of FIG. 12, the selection section 142 executes the preparation processing for selection of the use sensors. Specifically, the selection section 142, for example, demands the observation information at the predetermined time for all the sensors 121 of all the PCs 101, and receives demands the observation information at the predetermined time transmitted from all the sensors 121 of all the PCs 101 in response to the demand. Then, the selection section 142 arranges the received observation information every sensor 121-h to set the resulting information as the standard observation information, and supplies the standard observation information to the observation information database 143 to cause the observation information database 143 to store the standard observation information.

In Step S202, the selection section 142 selects the initial value of the same sensor set S with regard to all the PCs 101 from N sensors 121-1 to 121-N. The selection section 142 supplies use sensor information indicating the sensors 121-h included in the initial value of the sensor set S as the use sensors to the learning section 144.

In Step S203, the selection section 142 demands the observation information for 10 minutes for the use sensors of all the PCs 101.

In Step S204, the selection section 142 acquires the observation information for 10 minutes which is transmitted from the use sensors in response to the demand, and supplies the observation information to the prediction section 145. Processing from Steps S205 to S214 which will be described later is executed every the PC 101.

In Step S205, the prediction section 145 exceeds frequency deciding processing for calculating the predicted value f' of the failure probability within 24 hours of the PC 101 in accordance with the failure prediction model f'(x ; w') for the frequency decision by using the parameter w' and the observation information x of the use sensor.

In Step S206, the prediction section 145 decides whether or not the predicted value f' of the failure probability within 24 hours of the PC 101 is equal to or smaller than a threshold value. In the case where the prediction section 145 decides in Step S206 that the predicted value f' is not equal to or smaller than the threshold value, the processing proceeds to Step S207.

Since processing from Step S207 to S210 is similar to the processing from Step S13 to S16 of FIG. 3, a description thereof is omitted here. In the case where it is decided in Step S210 that the processing is not ended, the processing proceeds to Step S211.

In Step S211, the prediction section 145 decides whether or not 24 hours have elapsed from the last frequency deciding processing. In the case where the prediction section 145 decides in Step S211 that 24 hours have not elapsed from the last frequency deciding processing, the processing is returned back to Step S207, and the processing from Step S207 to S211 is repetitively executed until 24 hours have elapsed. That is, in the case where the predicted value f' of the failure probability within 24 hours of the PC 101 is not equal to smaller than the threshold value. Processing for the acquisition of the observation information and the failure state of the use sensors, and the failure predicting processing are executed until 24 hours have elapsed from the frequency depicting processing.

On the other hand, in the case where the prediction section 145 decides in Step S211 that 24 hours have elapsed from the last frequency deciding processing, the processing proceeds to Step S215.

Furthermore, in the case where it is decided in Step S206 that the predicted value f' of the failure probability within 24 hours of the PC 101 is equal to or smaller than a threshold value, in Step S212, the prediction section 145 decides whether or not 24 hours have elapsed from the last frequency deciding processing. In the case where the prediction section 145 decides in Step S212 that 24 hours have not elapsed from the last frequency deciding processing, the processing waits until 24 hours have elapsed.

On the other hand, in the case where the prediction section 145 decides in Step S212 that 24 hours have elapsed from the last frequency deciding processing, in Step S213, the selection section 142 demands the observation information for 10 minutes for the use sensors of the PC 101 as the processing target.

In Step S214, the selection section 142 acquires the observation information for 10 minutes which is transmitted from the use sensors in response to the demand, and supplies the observation information to the prediction section 145. Then, the processing proceeds to Step S215. That is, in the case where the predicted value f' of the failure probability within 24 hours of the PC 101 is equal to or smaller than the threshold value, the processing for the acquisition of the observation information and the failure state of the use sensors, and the failure predicting processing are not executed until 24 hours have elapsed from the frequency deciding processing.

In Step S215, the selection section 142 decides whether or not one week has elapsed from the last preparation processing. It should be noted that an interval of the preparation processing is by no means limited to one week. In the case where the selection section 142 decides in Step S215 that one week has not yet elapsed from the last preparation processing, the processing is returned back to Step S205, and the processing in and after Step S205 is repetitively executed.

On the other hand, in the case where the selection section 142 decides in Step S215 that one week has elapsed from the last preparation processing, in Step S216, the selection section 142, similarly to the case of the processing of Step S201, executes the preparation processing for selection of the use sensors.

Since processing of Step S217 and S218 is similar to the case of the processing of Steps S19 and S20 of FIG. 11 except that one element of the sensor set S is the sensor 121-h of all the PCs 101, a description thereof is omitted here. After execution of processing of Step 218, the processing is returned back to Step S203, and the processing in and after Step S203 is repetitively executed.

It should be noted that although an illustration is omitted, the learning processing in the learning section 144 is similar to the case of the learning processing of FIG. 9 except that the learning data $D_{BL}$ for the failure prediction is the observation information for each 10 minutes of the use sensors of all the PCs 101, and the failure information associated with the observation information of interest.

As described above, the information processing apparatus 102 calculates the predicted value f' of the failure probability within 24 hours and executes the failure predicting processing at the frequency based on the predicted value f' every the PC 101. Therefore, as compared with the case where the failure predicting processing of all the PCs 101 is usually executed, the acquisition time (observation time) of the observation information of the sensor 121, and the time required for the communication between the sensor 121 and the information processing apparatus 102 can be reduced, and thus the power consumption of the PC 101 and the PC 102 can be reduced. This is especially useful in the case where the number, M, of PCs 101 is large.

It should be noted that in the case where the number, M, of PCs 101 is large, M PCs 101 may be clustered into a plurality of clusters on the basis of the attribute information of the PC 101, and the failure probability calculating processing may be executed every the cluster. Furthermore, this clustering may be updated on the basis of the predicted value f of the failure probability within six hours of the PCs, the predicted value f' of the failure probability within 24 hours of the PCs, the observation information of the sensor 121, and the like.

Furthermore, in the case where the number, N, of sensors 121 installed in each of the PCs 101 is large, the selection section 142 may cluster N sensors 121-h into a plurality of clusters on the basis of the attribute information or the like of the sensors 121-h, and the sensor 121-h may be selected as the use sensor in units of the cluster.

Furthermore, although in the second embodiment, the sensor 121 is installed in the PC 101, the apparatus in which the sensor 121 is installed is by no means limited to a consumer apparatus such as a PC. For example, like the first embodiment, the sensor 121 may be installed in the manufacturing equipment such as the industrial robot.

Likewise, in the first embodiment, the sensor 21, like the second embodiment, may be installed in the consumer apparatus such as the PC.

<Third Embodiment>

(Description of Computer to Which the Present Disclosure is Applied)

The series of processing described above can be executed by hardware, or can be executed by software. In the case where the series of processing are executed by the software, a program composing the software is installed in a computer. Here, the computer includes a computer incorporated in a dedicated hardware, for example, a general-purpose personal computer which can carry out various kinds of functions by installing various kinds of parameters, and the like.

FIG. 13 is a block diagram depicting an example of a configuration of hardware of a computer which executes the series of processing described above in accordance with a program.

In a computer 200, a CPU (Central Processing Unit) 201, a ROM (Read Only Memory) 202, a RAM (Random Access Memory) 203 are connected to one another through a bus 204.

An I/O interface 205 is further connected to the bus 204. An input section 206, an output section 207, a storage section 208, a communication section 209, and a drive 210 are connected to the I/O interface 205.

The input section 206 includes a keyboard, a mouse, a microphone or the like. The output section 207 includes a display, a speaker or the like. The storage section 208 includes a hard disc, a non-volatile memory or the like. The communication section 209 includes a network interface or the like. The drive 210 drives a removable medium 212 such as a magnetic disc, an optical disc, a magneto-optical disc or a semiconductor memory.

In the computer 200 configured in the manner as described above, the CPU 201, for example, loads a program stored in the storage section 208 into the RAM 203 through the I/O interface 205 and the bus 204, and executes the program, thereby executing the series of processing described above.

The program which is to be executed by the computer 200 (CPU 201), for example, can be recorded in the removable medium 211 as a package medium or the like to be provided. Furthermore, the program can be provided through a wired or wireless transmission medium such as a local area network, the Internet, or digital satellite broadcasting.

In the computer 200, the drive 210 is equipped with the removable medium 211, thereby enabling the program to be installed in the storage section 208 through the I/O interface 205. Furthermore, the program can be received at the communication section 209 and can be installed in the storage section 208 through a wired or wireless transmission medium. Otherwise, the program can be previously installed in the ROM 202 or the storage section 208.

It should be noted that the program which is to be executed by the computer 200 may be a program in accordance with which the pieces of processing are executed along the order described in the present description, or may be a program in accordance with which the pieces of processing are executed in parallel to one another or at a necessary timing when a call is made, or the like.

Furthermore, in the present description, the system means a set of a plurality of constituent elements (apparatus module (component) or the like), and it does not matter whether or not all the constituent elements are present within the same chassis. Therefore, a plurality of apparatuses which is accumulated in different chassis and is connected through a network, and one apparatus in which a plurality of modules is accumulated in one chassis are each the system.

Furthermore, it should be noted that the effect described in the present description is merely an exemplification, and is by no means limited, and thus other effects may be offered.

Furthermore, the embodiments of the present disclosure are by no means limited to the embodiments described above, and various changes can be made without departing from the subject matter of the present disclosure.

For example, the time required for the observation information used in the prediction of the failure probability is by no means limited to 10 minutes. Furthermore, the time corresponding to the predicted failure probability is by no means limited to six hours.

The present disclosure can be applied to any type of system as long as it is a system which predicts a certain event from a plurality of sensors.

It should be noted that the present disclosure can adopt the following constitutions.

(1) An information processing apparatus, including:
a selection section selecting a transmission apparatus which transmits observation information to be used in prediction as a use apparatus from a plurality of transmission apparatuses on the basis of pieces of information associated with the plurality of transmission apparatuses, respectively.

(2) The information processing apparatus according to (1) described above, in which
the selection section selects the use apparatus on the basis of attribute information of the plurality of transmission apparatuses.

(3) The information processing apparatus according to (1) or (2) described above, in which
the selection section selects the use apparatus on the basis of a degree of association between a transmission apparatus contributed to the prediction in the past, and the plurality of transmission apparatuses.

(4) The information processing apparatus according to any one of (1) to (3) described above, in which
the selection section selects the use apparatus on the basis of a degree of association between a transmission apparatus not contributed to the prediction in the past, and the plurality of transmission apparatuses.

(5) The information processing apparatus according to any one of (1) to (4) described above, in which
the selection section selects the use apparatus on the basis of a degree of association between another transmission apparatus, and the plurality of transmission apparatuses.

(6) The information processing apparatus according to any one of (1) to (5) described above, in which
the selection section selects the use apparatus on the basis of contribution of the plurality of transmission apparatuses to the prediction.

(7) The information processing apparatus according to (6) described above, in which
the selection section calculates the contribution by using a contribution prediction model which predicts the contribution.

(8) The information processing apparatus according to (7) described above, in which
the selection section generates the contribution prediction model on the basis of teacher information associated with a plurality of transmission apparatuses for a teacher other than the plurality of transmission apparatuses, and a prediction accuracy for prediction using observation information transmitted from the transmission apparatus except for one from the plurality of transmission apparatuses for the teacher.

(9) The information processing apparatus according to (8) described above, in which
the teacher information is at least one of attribute information of the transmission apparatus for the teacher, a degree of association with the transmission apparatus contributed to the prediction in the past, a degree of association with the transmission apparatus not contributed to the prediction in the past, or a degree of association with other transmission apparatuses for a teacher.

(10) The information processing apparatus according to any one of (1) to (9) described above, in which
the selection section does not select a part of the use apparatus as the use apparatus on the basis of a predicted value of the prediction accuracy in a case where a part of the use apparatus is not selected as the use apparatus, thereby updating the use apparatus.

(11) The information processing apparatus according to any one of (1) to (10) described above, in which
the plurality of transmission apparatuses is installed in a plurality of apparatuses, respectively, and the selection section selects the same use apparatus for the plurality of apparatuses.

(12) The information processing apparatus according to (11) described above, further including:
a prediction section which performs the prediction on the basis of the observation information transmitted from the use apparatus at a frequency based on a result of the prediction every apparatus.

(13) An information processing method including:
a selection step of selecting a transmission apparatus which transmits observation information to be used in prediction as an a use apparatus from a plurality of transmission apparatuses on the basis of pieces of information associated with the plurality of transmission apparatuses, respectively.

[Reference Signs List]

12 information processing apparatus, 21-1 to 21-N sensor, 42 selection section, 102 information processing apparatus, 121-1-1 to 121-1-N sensor, 142 selection section

**Claims**

1. An information processing apparatus, comprising:
a selection section selecting a transmission apparatus which transmits observation information to be used in prediction as a use apparatus from a plurality of transmission apparatuses on the basis of pieces of information associated with the plurality of transmission apparatuses, respectively.

2. The information processing apparatus according to claim 1, wherein
the selection section selects the use apparatus on the basis of attribute information of the plurality of transmission apparatuses.

3. The information processing apparatus according to claim 1, wherein
the selection section selects the use apparatus on the basis of a degree of association between a transmission apparatus contributed to the prediction in the past, and the plurality of transmission apparatuses.

4. The information processing apparatus according to claim 1, wherein
the selection section selects the use apparatus on the basis of a degree of association between a transmission apparatus not contributed to the prediction in the past, and the plurality of transmission apparatuses.

5. The information processing apparatus according to claim 1, wherein
the selection section selects the use apparatus on the basis of a degree of association between another transmission apparatus, and the plurality of transmission apparatuses.

6. The information processing apparatus according to claim 1, wherein
the selection section selects the use apparatus on the basis of contribution of the plurality of transmission apparatuses to the prediction.

7. The information processing apparatus according to claim 6, wherein
the selection section calculates the contribution by using a contribution prediction model which predicts the contribution.

8. The information processing apparatus according to claim 7, wherein
the selection section generates the contribution prediction model on the basis of teacher information associated with a plurality of transmission apparatuses for a teacher other than the plurality of transmission apparatuses, and a prediction accuracy for prediction using observation information transmitted from the transmission apparatus except for one from the plurality of transmission apparatuses for the teacher.

9. The information processing apparatus according to claim 8, wherein
the teacher information is at least one of attribute information of the transmission apparatus for the teacher, a degree of association with the transmission apparatus contributed to the prediction in the past, a degree of association with the transmission apparatus not contributed to the prediction in the past, or a degree of association with other transmission apparatuses for a teacher.

10. The information processing apparatus according to claim 1, wherein
the selection section does not select a part of the use apparatus as the use apparatus on the basis of a predicted value of the prediction accuracy in a case where a part of the use apparatus is not selected as the use apparatus, thereby updating the use apparatus.

11. The information processing apparatus according to claim 1, wherein
the plurality of transmission apparatuses is installed in a plurality of apparatuses, respectively, and the selection section selects the same use apparatus for the plurality of apparatuses.

12. The information processing apparatus according to claim 11, further comprising:
a prediction section which performs the prediction on the basis of the observation information transmitted from the use apparatus at a frequency based on a result of the prediction every apparatus.

13. An information processing method, comprising:
a selection step of selecting a transmission apparatus which transmits observation information to be used in prediction as an a use apparatus from a plurality of transmission apparatuses on the basis of pieces of information associated with the plurality of transmission apparatuses, respectively.

# F I G . 1

INFORMATION
PROCESSING
APPARATUS

# F I G . 2

INFORMATION PROCESSING APPARATUS

12

INDUSTRIAL ROBOT

11

20 — STATE OBSERVING SECTION

21—1 — SENSOR

21—2 — SENSOR

21—N — SENSOR

41 SENSOR INFORMATION DATABASE

43 OBSERVATION INFORMATION DATABASE

SELECTION SECTION

42

LEARING SECTION ~ 44

PREDICTION SECTION ~ 45

10

EP 3 550 478 A1

FIG.3

```
            ( START FAILURE PROBABILITY CALCULATING PROCESSING )
                                    │
                                    ▼
            ┌───────────────────────────────────────────┐  S11
            │      EXECUTE PREPARATION PROCESSING        │
            └───────────────────────────────────────────┘
                                    │
                                    ▼
            ┌───────────────────────────────────────────┐  S12
            │      SELECT INITIAL VALUE OF SENSOR SET S   │
            └───────────────────────────────────────────┘
                                    │
                                    ▼
            ┌───────────────────────────────────────────┐  S13
            │      DEMAND OBSERVATION INFORMATION AND     │
            │        FAILURE STATES OF USE SENSORS        │
            └───────────────────────────────────────────┘
                                    │
                                    ▼
            ┌───────────────────────────────────────────┐  S14
            │      ACQUIRE OBSERVATION INFORMATION        │
            │      AND FAILURE STATES OF USE SENSORS      │
            └───────────────────────────────────────────┘
                                    │
                                    ▼
            ┌───────────────────────────────────────────┐  S15
            │         FAILURE PREDICTING PROCESSING       │
            └───────────────────────────────────────────┘
                                    │
                                    ▼                     S16
      YES              IS FAILURE PROBABILITY
     ◄──────           CALCULATING PROCESSING
                              ENDED?
   ( END )                     │NO
                               ▼                          S17
                     HAS ONE WEEK ELAPSED FROM
                     LAST PREPARATION PROCESSING ?        NO ──►
                               │YES
                               ▼
            ┌───────────────────────────────────────────┐  S18
            │      EXECUTE PREPARATION PROCESSING         │
            └───────────────────────────────────────────┘
                               │
                               ▼
            ┌───────────────────────────────────────────┐  S19
            │        SENSOR SELECTING PROCESSING          │
            └───────────────────────────────────────────┘
                               │
                               ▼
            ┌───────────────────────────────────────────┐  S20
            │      SUPPLY USE SENSOR INFORMATION          │
            │        INDICATING SENSOR SET S              │
            └───────────────────────────────────────────┘
```

# F I G . 4

START FAILURE PROBABILITY
PREDICTING PROCESSING

ACQUIRE OBSERVATION INFORMATION
FOR 10 MINUTES OF USE SENSORS

S41

CALCULATE PREDICTED VALUE OF FAILURE
PROBABILITY IN ACCORDANCE WITH FAILURE
PREDICTION MODEL BY USING PARAMETER
AND OBSERVATION INFORMATION FOR 10
MINUTES OF USE SENSORS

S42

RETURN

# FIG. 5

START SENSOR SELECTING PROCESSING

DIVIDE ONE WEEK DATA $D_w$ INTO TWO PIECES, AND SET ONE AS LEARNING DATA $D_c$ FOR FAILURE PREDICTION, AND SET THE OTHER AS DATA $D_p$ FOR PREDICTION ACCURACY CALCULATION | S81

$p=0$ | S82

SET SENSOR SET S AS SENSOR SET AS PROCESSING TARGET | S83

PREDICTED ACCURACY VALUE CALCULATING PROCESSING | S84

S85 $p=0$? — YES

NO

DIFFERENCE $Y_p$ = PREDICTED ACCURACY VALUE OF SENSOR SET S' - PREDICTED ACCURACY VALUE OF SENSOR SET S | S88

INCLUDE SENSOR INFORMATION $X_p$ AND DIFFERENCE $Y_p$ IN USE SENSOR $S_p$ IN LEARNING DATA $D_{CL}$ FOR CONTRIBUTION PREDICTION | S89

S90 $p \geqq n$? — NO

YES

$p=p+1$ | S86

SET SENSOR SET S' OBTAINED BY REMOVING p-TH USE SENSOR Sp FROM SENSOR SET S AS SENSOR SET AS PROCESSING TARGET | S87

MACHINE-LEARN CONTRIBUTION PREDICTION MODEL IN ACCORDANCE WITH MACHINE LEARNING ALGORITHM BY USING LEARNING DATA $D_{CL}$ FOR CONTRIBUTION PREDICTION | S91

CALCULATE PREDICTED VALUE fc OF CONTRIBUTION OF SENSORS IN ACCORDANCE WITH CONTRIBUTION PREDICTION MODEL fc(X) BY USING SENSOR INFORMATION X OF SENSORS NOT INCLUDED IN SENSOR SET S | S92

SELECT SENSOR IN WHICH PREDICTED VALUE fc OF CONTRIBUTION IS POSITIVE AS ADDITIONAL SENSOR TO BE ADDED TO SENSOR SET S | S93

SELECT m SENSORS $S_p$ IN ORDER FROM LARGER DIFFERENCE $Y_p$ | S94

EXECUTE PREDICTED ACCURACY VALUE CALCULATING PROCESSING FOR SENSOR SET OBTAINED BY REMOVING SUBSETS OF SELECTED USE SENSOR $S_p$ FROM SENSOR SETS, RESPECTIVELY | S95

SELECT SUBSET CORRESPONDING TO SENSOR SET HAVING THE HIGHEST PREDICTED ACCURACY VALUE AS REMOVAL SENSOR TO BE REMOVED FROM SENSOR SET S | S96

ADD ADDITIONAL SENSOR TO SENSOR SET S TO REMOVE REMOVAL SENSOR | S97

RETURN

# F I G . 6

SENSOR SET S'

SENSOR SET S

$s_p$

$s_p$

NOT INCLUDING

$Y_p$= (PREDICTED ACCURACY VALUE OF SENSOR SET S')
− (PREDICTED ACCURACY VALUE OF SENSOR SET S)

# FIG.7

SENSOR SET S1
$s_a$　$s_c$　$s_b$

SENSOR SET S2
$s_a$　$s_c$

SENSOR SET S3
$s_a$　$s_b$

SENSOR SET S4
$s_c$　$s_b$

SENSOR SET S5
$s_a$

SENSOR SET S6
$s_b$

SENSOR SET S7
$s_c$

EP 3 550 478 A1

# F I G . 8

```
START PREDICTED ACCURACY VALUE
CALCULATING PROCESSING
```

MACHINE-LEARN PARAMETER IN ACCORDANCE
WITH MACHINE-LEARNING ALGORITHM BY USING
LEARNING DATA FOR FAILURE PREDICTION OF
SENSOR SET AS PROCESSING TARGET

S111

CALCULATE PREDICTED VALUE OF FAILURE
PROBABILITY IN ACCORDANCE WITH FAILURE
PREDICTION MODEL BY USING DATA FOR PREDICTED
ACCURACY CALCULATION OF PARAMETER AND
SENSOR SET AS PROCESSING TARGET

S112

CALCULATE PREDICTED ACCURACY VALUE OF
SENSOR SET AS PROCESSING TARGET ON THE
BASIS OF PREDICTED VALUE AND FAILURE
INFORMATION OF FAILURE PROBABILITY

S113

RETURN

FIG. 9

$$\boxed{\text{START LEARNING PROCESSING}}$$

SET OBSERVATION INFORMATION AND FAILURE
STATE EVERY 10 MINUTES OF USE SENSORS AS
LEARNING $D_{BL}$ DATA FOR FAILURE PREDICTION

S161

MACHINE-LEARN PARAMETER IN ACCORDANCE
WITH MACINE LEARNING ALGORITHM BY USING
LEARNING DATA FOR FAILURE PREDICTION

S162

SUPPLY PARAMETER

S163

$$\boxed{\text{END}}$$

FIG.10

# FIG.11

# FIG.12

START FAILURE PROBABILITY CALCULATING PROCESSING

EXECUTE PREPARATION PROCESSING — S201

SELECT INITIAL VALUE OF SENSOR SET S — S202

DEMAND OBSERVATION INFORMATION FOR USE SENSORS OF ALL PCs — S203

ACQUIRE OBSERVATION INFORMATION OF USE SENSORS — S204

EXECUTE FREQUENCY DECIDING PROCESSING — S205

S206 — IS PREDICTED VALUE OF FAILURE PROBABILITY WITHIN 24 HOURS EQUAL TO OR SMALLER THAN THRESHOLD VALUE?

YES

NO

DEMAND OBSERVATION INFORMATION AND FAILURE STATES OF USE SENSORS — S207

ACQUIRE OBSERVATION INFORMATION AND FAILURE STATES OF USE SENSORS — S208

EXECUTE FAILURE PREDECTING PROCESSING — S209

S210 — IS FAILURE PROBABILITY CALCULATING PROCESSING ENDED?

YES

END

NO

S211 — HAVE 24 HOURS ELAPSED FROM LAST FREQUENCY DECIDING PROCESSING?

NO

YES

S212 — HAVE 24 HOURS ELAPSED FROM LAST FREQUENCY DECIDING PROCESSING?

NO

YES

DEMAND OBSERVATION INFORMATION FOR USE SENSORS — S213

ACQUIRE OBSERVATION INFORMATION OF USE SENSORS — S214

S215 — HAS ONE WEEK ELAPSED FROM LAST PREPARATION PROCESSING?

NO

YES

EXECUTE PREPARATION PROCESSING — S216

SENSOR SELECTING PROCESSING — S217

SUPPLY USE SENSOR INFORMATION INDICATING SENSOR SET S — S218

# F I G . 1 3

EP 3 550 478 A1

## INTERNATIONAL SEARCH REPORT

| | International application No. |
|---|---|
| | PCT/JP2017/041186 |

**A. CLASSIFICATION OF SUBJECT MATTER**
Int. Cl. G06Q10/04(2012.01)i

According to International Patent Classification (IPC) or to both national classification and IPC

**B. FIELDS SEARCHED**

Minimum documentation searched (classification system followed by classification symbols)
Int. Cl. G06Q10/04

Documentation searched other than minimum documentation to the extent that such documents are included in the fields searched
Published examined utility model applications of Japan    1922-1996
Published unexamined utility model applications of Japan    1971-2017
Registered utility model specifications of Japan    1996-2017
Published registered utility model applications of Japan    1994-2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2011-70596 A (FUJITSU LTD.) 07 April 2011, in particular, paragraphs 8, 42-51 (Family: none) | 1-7, 10-13<br>8, 9 |
| Y<br>A | JP 2006-135412 A (TOKYO GAS CO., LTD.) 25 May 2006, in particular, paragraphs 8, 17-23, 50-71 (Family: none) | 1-7, 10-13<br>8, 9 |
| Y<br>A | JP 2007-80190 A (NEC CORP.) 29 March 2007, in particular, paragraphs 70, 71, 78-92, 122-146<br>& US 2007/0067742 A1, in particular paragraphs 89, 90, 96-110, 139-163 | 3, 4,6, 7<br>1, 2,5, 8-13 |

☒ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| | |

| Name and mailing address of the ISA/<br>    Japan Patent Office<br>    3-4-3, Kasumigaseki, Chiyoda-ku,<br>    Tokyo 100-8915, Japan | Authorized officer<br><br>Telephone No. |

Form PCT/ISA/210 (second sheet) (January 2015)

**INTERNATIONAL SEARCH REPORT**

| International application No. |
|---|
| PCT/JP2017/041186 |

C (Continuation).    DOCUMENTS CONSIDERED TO BE RELEVANT

| Category* | Citation of document, with indication, where appropriate, of the relevant passages | Relevant to claim No. |
|---|---|---|
| Y<br>A | JP 2012-251777A (TOYOTA INFOTECHNOLOGY CENTER, CO., LTD.) 20 December 2012, in particular, paragraphs 6 & US 2014/0107812 A1, in particular, paragraphs 7 & WO 2012/165496 A1 & DE 112012002285 T5 & CN 103562685 A | 5<br>1-4, 6-13 |
| Y<br>A | JP 2004-272506 A (JAPAN RADIO CO., LTD.) 30 September 2004, in particular, paragraphs 29-30 (Family: none) | 12<br>1-11, 13 |

Form PCT/ISA/210 (continuation of second sheet) (January 2015)

**REFERENCES CITED IN THE DESCRIPTION**

**Patent documents cited in the description**

- JP 2016109019 A